# EUROPÄISCHE PATENTSCHRIFT

(11) **EP 0 902 041 B1**
(45) Veröffentlichungstag und Bekanntmachung des Hinweises auf die Patenterteilung: **23.10.2002**
(21) Anmeldenummer: 98116078.1
(22) Anmeldetag: 26.08.1998
(51) Int. Cl.: C08G 63/60, B44C 3/04

(54) **Milchsäurepolymerisate**
Lactic acid base polymers
Polymères à base d'acide lactique

(30) Priorität: 12.09.1997 DE 19740111
(43) Veröffentlichungstag der Anmeldung: 17.03.1999
(73) Patentinhaber: BASF AKTIENGESELLSCHAFT, 67056 Ludwigshafen (DE)
(72) Erfinder: Yamamoto, Motonori, 68199 Mannheim (DE); Witt, Uwe, Dr., 67112 Mutterstadt (DE)

(56) Entgegenhaltungen:
- EP-A- 0 618 249
- EP-A- 0 829 503

## Beschreibung

Die vorliegende Erfindung betrifft Polymerisate die auf
a) Milchsäure oder deren C₁- bis C₄-Alkylester oder deren Mischungen,
b) mindestens einer aliphatischen C₄- bis C₁₀-Dicarbonsäure und
c) mindestens einem C₃- bis C₁₀-Alkanol mit drei bis fünf Hydroxygruppen
als monomere Bausteine basieren. Darüber hinaus betrifft die vorliegende Erfindung ein Verfahren zur Herstellung dieser Polymerisate sowie deren Verwendung in Kinderknete, nicht permanenten Klebstoffen und biologisch abbaubaren Polymermischungen.

Polymere Umsetzungsprodukte der Milchsäure sind bekannt. Neben Polylactid sind auch Co- oder Blockcopolymere auf der Basis von Milchsäure und weiteren Monomeren bekannt. Meist sind die Milchsäurepolymerisate des Standes der Technik lineare Polymere, es wurden jedoch auch bereits verzweigte Milchsäurepolymerisate beschrieben. So werden in der JP 91/10972 biologisch abbaubare Polyester beschrieben, die neben Milchsäure aus einem Diol, einer Dicarbonsäure und einer trifunktionellen Säure aufgebaut sind. Diese werden in Gegenwart einer Germaniumverbindung als Katalysator polymerisiert und dienen der Herstellung von Formkörpern. Für die Herstellung als Formkörper eignen sich biologisch abbaubare Polyester , die neben Milchsäure, Diol und Dicarbonsäure eine Hydroxycarbonsäure mit vier funktionellen Gruppen enthalten. Auch diese werden gemäß der JP 91/10971 in Gegenwart einer Germaniumverbindung als Katalysator hergestellt. Ein weiteres verzweigtes Milchsäurepolymerisat einer hohen Schmelzeviskosität und eines hohen Molekulargewichtes ist der JP 82/59680 zu entnehmen. Dort wird ein Polymerisat aus aliphatischen Diolen, aliphatischen Dicarbonsäuren, Milchsäure und einem trifunktionellen aliphatischen Alkohol beschrieben, das durch Polymerisation in Gegenwart von Germaniumoxid erhältlich ist.

Aufgabe der vorliegenden Erfindung war es, einen Milchsäurepolyester zu entwickeln, der sich aufgrund seiner gummiartigen Eigenschaften zur Herstellung von Kinderknete eignet, sich als nicht permanenter Klebstoff einsetzen läßt und als Blendkomponente in biologisch abbaubaren Polymermischungen verwendet werden kann.

Diese Aufgabe erfüllt das eingangs definierte Polymerisat.

Erfindungsgemäß basiert das Polymerisat auf Milchsäure (2-Hydroxypopansäure) als monomerem Baustein a. Dabei kann als Milchsäure sowohl die optisch aktive L- oder D-Form eingesetzt als auch eine Mischung der Enantiomeren verwendet werden. Erfindungsgemäß sollen unter dem Begriff "Milchsäure" auch deren intramolekularen Ester als auch deren poly- oder oligomeren Ester verstanden werden, die in kommerziell erhältlichen wässrigen Milchsäurelösungen als Nebenprodukte enthalten sind. Im allgemeinen wird die Milchsäure als wässrige Lösung eingesetzt. Deren Konzentration liegt im Allgemeinen im Bereich von 50 bis 95, bevorzugt im Bereich von 80 bis 95 Gew.-%. Neben Milchsäure kann die Komponente a auch ein C₁- bis C₄-Alkylester der Milchsäure wie Methyllactat, Ethyllactat oder n-Butyllactat sein. Die Komponente a kann aber auch eine Mischung aus Milchsäure und einem oder mehreren Milchsäureestern sein. Besonders bevorzugt wird Milchsäure alleine verwendet. In der Regel beträgt der Anteil der Komponente a an den erfindungsgemäßen Polymerisaten von 40 bis 95, bevorzugt von 50 bis 90 Gew.-%, bezogen auf das Gesamtgewicht des Polymerisates.

Eine oder eine Mischung aus zwei oder mehr aliphatischen C₄- bis C₁₀-Dicarbonsäuren werden erfindungsgemäß als monomere Bausteine b verwendet. Beispielsweise können als Komponente b Bernsteinsäure, Glutarsäure, Adipinsäure oder Pimelinsäure, darunter besonders bevorzugt Adipinsäure, eingesetzt werden. Im allgemeinen beträgt der Anteil der Komponente b an den Polymerisaten von 4 bis 40, bevorzugt von 5 bis 30 Gew.-%, bezogen auf das Gesamtgewicht des Polymerisates.

Als monomere Bausteine c kann erfindungsgemäß ein oder eine Mischung aus zwei oder mehreren C₃- bis C₁₀-Alkanolen mit dreibis fünf Hydroxygruppen verwendet werden. Die Alkanole können lineare oder verzweigte Alkylketten, worunter die linearen bevorzugt werden, aufweisen. Beispiele geeigneter Alkanole sind Glycerin, Trimethylolpropan, Pentaerythritol oder Sorbit. Besonders bevorzugt wird Glycerin (1,2,3-Trihydroxypropan) eingesetzt. Der Anteil der Komponente c an den Polymerisaten beträgt im Allgemeinen von 1 bis 20, bevorzugt von 5 bis 20 Gew.-%, bezogen auf das Gesamtgewicht des Polymerisates. Ist der Anteil der Komponente c höher, werden gelartige Polymerisate erhalten.

Verfahren zur Herstellung von Milchsäurepolymerisaten sind an sich bekannt. Beispielsweise sind derartige Verfahren in der EP-A1-572 675 oder Biodegradable Plastics and Polymers, Elsevier Verlag 1994, S. 492, beschrieben, sodass sich nähere Angaben hierüber erübrigen.

Die erfindungsgemäßen Polymerisate können unter Zugabe von geeigneten, an sich bekannten Katalysatoren wie Metallverbindungen auf der Basis folgender Elemente: Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate, bevorzugt auf der Basis von Zink, Zinn oder Titan hergestellt werden. Bei der Verwendung der erfindungsgemäßen Polymerisate, beispielsweise im Verpackungsbereich z.B. für Nahrungsmittel, ist es in der Regel wünschenswert, den Gehalt an eingesetztem Katalysator so gering als möglich zu wählen sowie keine toxischen Verbindungen einzusetzen. Im Gegensatz zu anderen Schwermetallen wie Blei, Zinn, Antimon, Cadmium, Chrom etc. sind Titan- und Zinkverbindungen in der Regel nicht toxisch ("Sax Toxic Substance Data Book", Shizuo Fujiyama, Maruzen, K.K., S 360 (zitiert in EP-A 565,235), siehe auch Römpp Chemie Lexikon Bd. 6, Thieme Verlag, Stuttgart, New York, 9. Auflage, 1992, S. 4626 bis 4633 und 5136 bis 5143). Beispielhaft seien genannt: Dibutoxydiacetoacetoxytitan, Tetrabutylorthotitanat und Zink(II)-acetat.

Das Gewichtsverhältnis von Katalysator zu Polymerisat liegt üblicherweise im Bereich von 0,01:100 bis 3:100, vorzugsweise von 0,05:100 bis 2:100, wobei bei hochaktiven Titanverbindungen auch kleinere Mengen eingesetzt werden können wie 0,0001:100.

Der Katalysator kann gleich zu Beginn der Reaktion, unmittelbar kurz vor der Abtrennung überschüssiger Komponente C oder gewünschtenfalls auch in mehreren Portionen verteilt während der Herstellung der Polymerisate eingesetzt werden. Gewünschtenfalls können auch verschiedene Katalysatoren oder auch Gemische davon eingesetzt werden. Besonders bevorzugt werden die Monomeren jedoch in Abwesenheit eines Katalysators polymerisiert.

In der Regel findet die Umsetzung der Monomeren a, b und c zu den erfindungsgemäßen Polymerisaten in Abwesenheit eines zusätzlich zugegebenen Lösungsmittels statt. In der Regel wird bei Temperaturen im Bereich von 130 bis 180, bevorzugt im Bereich von 160 bis 170°C polymerisiert. Man kann Vormischungen aus a und c oder b und c herstellen und anschließend mit b bzw. a polymerisieren oder man kann alle Komponenten gemeinsam vorlegen und umsetzen.

Es kann von Vorteil sein, die Umsetzung unter Inertgasatmosphäre, beispielsweise Stickstoff, durchzuführen. Um das Wasser aus der Reaktionsmischung zu entfernen, kann es weiterhin vorteilhaft sein, die Umsetzung unter vermindertem Druck oder in einem Inertgasstrom durchzuführen.

Um unerwünschte Abbau- und/oder Nebenreaktionen zu vermeiden, kann man in dieser Verfahrensstufe gewünschtenfalls auch Stabilisatoren zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebenen Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (Vitamin E; beispielsweise als Uvinul® 2003AO (BASF) erhältlich).

Die erfindungsgemäßen Polymerisate sind charakterisiert durch Molekulargewichte (Mₙ) im Bereich von 1000 bis 100000, bevorzugt im Bereich von 3000 bis 30000 g/mol und Viskositätszahlen im Bereich von 10 bis 500, bevorzugt im Bereich von 50 bis 300 g/ml (gemessen in einer Mischung aus o-Chlorbenzol und Phenol im Gewichtsverhältnis 1:1, bei einer Konzentration von 0,5 Gew.-%). Die erfindungsgemäßen Polyester weisen Glasübergangstemperaturen im Bereich von -20 bis 50, bevorzugt im Bereich von -10 bis 40°C auf. Die erfindungsgemäßen Polymerisate haben eine helle Eigenfarbe, sind gummiartig und leicht klebrig. Beim Verkneten nehmen die Polymerisate Luft auf.

Die Klebrigkeit der erfindungsgemäßen Polymerisate läßt sich über die Zugabe von Füllstoffen reduzieren oder für die Verwendung als Klebstoff auch mit geeigneten klebrigmachenden Harzen, bevorzugt Naturharzen wie Schellack, Acroidharze oder Balsamharz auf die gewünschte Haftstärke auf Oberflächen wie Haut, Papier oder Cellulose einstellen.

Bezogen auf die erfindungsgemäßen Polymerisate kann man von 0 bis 80 Gew.-% Füllstoffe zusetzen. Geeignete Füllstoffe sind beispielsweise Ruß, Stärke, Ligninpulver, Cellulosefasern, Naturfasern wie Sisal und Hanf, Eisenoxide, Tonmineralien, Erze, Calciumcarbonat, Calciumsulfat, Bariumsulfat und Titandioxid. Die Füllstoffe können zum Teil auch Stabilisatoren wie Tocopherol (Vitamin E), organische Phosphorverbindungen, Mono-, Di- und Polyphenole, Hydrochinone, Diarylamine, Thioether, UV-Stabilisatoren, Nukleierungsmittel wie Talkum sowie Gleit- und Formtrennmittel auf Basis von Kohlenwasserstoffen, Fettalkoholen, höheren Carbonsäuren, Metallsalzen höherer Carbonsäuren wie Calcium- und Zinkstearat, und Wachse, z.B. Montanwachs, Bienenwachs, Candelillawachs oder Carnaubawachs enthalten. Solche Stabilisatoren etc. sind in Kunststoff-Handbuch, Bd. 3/1, Carl Hanser Verlag, München, 1992, S. 24 bis 28 ausführlich beschrieben.

Die erfindungsgemäßen Polymere können außerdem durch den Zusatz von organischen oder anorganischen Farbstoffen beliebig eingefärbt werden. Die Farbstoffe können im weitesten Sinne auch als Füllstoff angesehen werden. Besonders bevorzugt werden Farbstoffe eingesetzt, die physiologisch unbedenklich sind wie Sicuranblau, Titandioxid oder Eisenoxid.

Die erfindungsgemäßen Polymerisate eignen sich insbesondere für die Herstellung von Kinderknete, da sie physiologisch unbedenklich sind, eine gummiartige Konsistenz haben und beim Verkneten außerdem Lufteinschlüsse aufweisen können.

Nach einer anderen bevorzugten Ausführungsform können die erfindungsgemäßen Polymerisate auf Oberflächen, beipielsweise durch Streichen oder Walzen aufgebracht und als Klebstoff eingesetzt werden. Besonders sind die erfindungsgemäßen Polymerisate für die Herstellung von Klebstoffen geeignet, die es erlauben, aneinander geklebte Papierseiten nach einiger Zeit wieder voneinander zu trennen. Da die erfindungsgemäßen Polymerisate außerdem biologisch abbaubar sind, läßt sich damit bestrichenes Papier oder Cellulose besonders einfach, beispielsweise durch Kompostieren, entsorgen.

Des Weiteren können die erfindungsgemäßen Polymerisate für die Herstellung von Polymermischungen eingesetzt werden. Vorzugsweise sind die anderen polymeren Bestandteile dieser Blends ebenfalls biologisch abbaubar. Als Blendpartner können beispielsweise biologisch abbaubare teilaromatische Copolyester, wie sie z.B. in der DE-A 44 40 858 beschrieben sind, eingesetzt werden.

### Beispiel

10 mol (1000 g) Milchsäure (als 90 gew.-%ige Lösung in Wasser), 3 mol Adipinsäure (438 g) und 3 mol Glycerin (276 g) wurden gemischt und bei 150°C und atmosphärischem Druck umgesetzt. Anschließend wurde der Druck auf 5 mbar erniedrigt und die Reaktionsmischung bei 170°C zwei Stunden lang gerührt. Das so erhaltene Polymerisat hatte bei Raumtemperatur gummiartige Eigenschaften, war farblos und leicht klebrig.

## Patentansprüche

1. Polymerisate, im wesentlichen aufgebaut aus den Monomeren
a) Milchsäure oder deren C₁- bis C₄-Alkylester oder deren Mischungen,
b) Adipinsäure und
c) Glycerin.

2. Polymerisate nach Anspruch 1, im wesentlichen aufgebaut aus den Monomeren
a) 50 - 90 Gew.-% Milchsäure oder deren C₁- bis C₄-Alkylester oder deren Mischungen
b) 5 bis 30 Gew.-% Adipinsäure und
c) 5 bis 20 Gew.-% Glycerin.

3. Polymerisate nach Anspruch 1 oder 2, im wesentlichen aufgebaut aus den Monomeren
a) Milchsäure,
b) Adipinsäure
c) Glycerin

4. Verfahren zur Herstellung der Polymerisate gemäß den Ansprüchen 1 bis 3, **dadurch gekennzeichnet, daß** man die Monomeren a, b und c miteinander mischt und in Abwesenheit eines Katalysators polymerisiert.

5. Verwendung der Polymerisate gemäß der Ansprüche 1 bis 3 zur Herstellung von Kinderknete.

6. Kinderknete, enthaltend Polymerisate gemäß den Ansprüchen 1 bis 3.

7. Verwendung der Polymerisate gemäß zur den Ansprüchen 1 bis 3 Herstellung von nicht permanentem Klebstoff.

8. Nicht permanenter Klebstoff, enthaltend Polymerisate gemäß den Ansprüchen 1 bis 3.

9. Verwendung der Polymerisate gemäß den Ansprüchen 1 bis 3 zur Herstellung von biologisch abbaubaren Polymermischungen.

10. Biologisch abbaubare Polymermischungen, enthaltend die Polymerisate gemäß den Ansprüchen 1 bis 3.

## Claims

1. A polymer substantially constructed from the following monomers:
a) lactic acid or its C₁-C₄ alkyl esters, or mixtures thereof,
b) adipic acid, and
c) glycerol.

2. A polymer as claimed in claim 1 substantially constructed from the following monomers:
a) 50-90% by weight of lactic acid or its C₁-C₄ alkyl esters, or mixtures thereof,
b) from 5 to 30% by weight of adipic acid, and
c) from 5 to 20% by weight of glycerol.

3. A polymer as claimed in claim 1 or 2 substantially constructed from the following monomers:
a) lactic acid,
b) adipic acid
c) glycerol.

4. A process for the preparation of a polymer as claimed in claims 1 to 3, wherein the monomers a, b and c are intermixed and polymerized in the absence of a catalyst.

5. The use of a polymer as claimed in any of claims 1 to 3 for producing childrens' modeling compound.

6. Childrens' modeling compound comprising a polymer as claimed in any of claims 1 to 3.

7. The use of a polymer as claimed in any of claims 1 to 3 for producing non-permanent adhesive.

8. A non-permanent adhesive comprising a polymer as claimed in any of claims 1 to 3.

9. The use of a polymer as claimed in any of claims 1 to 3 for producing a biodegradable polymer blend.

10. A biodegradable polymer blend comprising a polymer as claimed in any of claims 1 to 3.

## Revendications

1. Polymères, essentiellement élaborés à partir des monomères
a) acide lactique ou ses esters d'alkyle en C₁ à C₄ ou leurs mélanges,
b) acide adipique et
c) glycérine.

2. Polymères selon la revendication 1, essentiellement élaborés à partir des monomères
a) 50 - 90 % en poids d'acide lactique ou de ses esters d'alkyle en C₁ à C₄ ou de leurs mélanges
b) 5 à 30 % en poids d'acide adipique et
c) 5 à 20 % en poid de glycérine.

3. Polymères selon la revendication 1, essentiellement élaborés à partir des monomères
a) acide lactique
b) acide adipique et
c) glycérine.

4. Procédé pour la préparation des polymères selon les revendications 1 à 3, **caractérisé par le fait qu'**on mélange entre eux les monomères a, b et c et on polymérise en l'absence de catalyseur.

5. Utilisation des polymères selon les revendications 1 à 3 pour la préparation de pâte à modeler.

6. Pâte à modeler, contenant des polymères selon les revendications 1 à 3.

7. Utilisation des polymères selon les revendications 1 à 3 pour la préparation d'adhésif non-permanent.

8. Adhésif non-permanent, contenant des polymères selon les revendications 1 à 3.

9. Utilisation des polymères selon les revendications 1 à 3 pour la préparation de mélanges de polymères biodégradables.

10. Mélanges de polymères biodégradables, contenant les polymères selon les revendications 1 à 3.
